# EUROPEAN PATENT SPECIFICATION

(11) **EP 2 823 969 B1**
(45) Date of publication and mention of the grant of the patent: **17.08.2016**
(21) Application number: 14186384.5
(22) Date of filing: 06.06.2012
(51) Int. Cl.: B41M 5/00, B41M 7/00, C09D 11/101, C09D 11/322, C09D 11/38

(54) **Production method for foodstuffs and pharmaceuticals**
Fertigungsverfahren für Nahrungsmittel und pharmazeutische Produkte
Procédés de production pour des produits alimentaires et pharmaceutiques

(43) Date of publication of application: 14.01.2015
(62) Divisional of application: 12170916.6
(73) Proprietor: AGFA GRAPHICS NV, 2640 Mortsel (BE)
(72) Inventor: De Mondt, Roel, 2640 Mortsel (BE); Thijs, Ivo, 2640 Mortsel (BE)
(74) Representative: Strijckers, Hans Louis P.

(56) References cited:
- WO-A1-2013/059568
- JP-A- S 641 777
- JP-A- H1 016 926

## Description

### Technical Field

The present invention relates to radiation curable inkjet inks and industrial inkjet printing therewith on packaging materials for foodstuffs and pharmaceutical compounds and liquids.

### Background Art

In industrial ink jet systems, there is a constant demand for increased printing speeds in combination with high image quality. The new print heads, designed for increasing printing speed, only operate with very low viscous inkjet inks. Suitable monomers to obtain such very low viscous ink jet inks have been described, for example, in EP 997508 A (AGFA) that discloses radiation curable monomers containing vinyl ether and acrylate functions.

Printing systems, such as offset and flexography, are being increasingly replaced for packaging applications by industrial inkjet printing systems due to their flexibility in use, e.g. variable data printing, and due to their enhanced reliability, allowing their incorporation into production lines. Radiation curable inkjet inks are particularly preferred because high quality images can be printed on non-absorbing ink-receivers, such as e.g. polyolefin based substrates, like polyethylene or polypropylene films, frequently used as a packaging material. Although a high image quality can be obtained, radiation curable inkjet inks often exhibit problems of adhesion to these polyolefin based substrates.

Adhesion can be influenced by modifying the ink composition, e.g. by using specific organic solvents, polymerizable compounds, etc. US 6814791 (DOMINO PRINTING SCIENCES) discloses inkjet printing methods for printing on polypropylene and polyethylene substrates with an inkjet ink comprising methyl acetate. The use of a well-chosen solvent can result in partial swelling or dissolution of the ink-receiver surface which leads to better adhesion; however it can also cause problems of blocked nozzles in the print head due to evaporation of the organic solvent. Instead of organic solvents, also monomers can be used for partial swelling or dissolution of the substrate. For example, EP 2195396 A (SUN CHEMICAL) discloses that tetrahydrofurfuryl acrylate, 1,6-hexanediol diacrylate and N-vinyl caprolactam are suitable for the swelling of a PVC substrate.

Adhesion problems have also been associated with shrinkage of an ink-layer after radiation curing. In this aspect, cationic inks including oxetanes, epoxides and vinyl ether compounds have been regarded to be superior in comparison to free radical polymerizable inks. EP 1705229 A (FUJI) discloses cationically polymerizable inkjet inks exhibiting good adhesion and storage stability. In free radical inkjet inks, high amounts of monofunctional polymerizable compounds are thought to be advantageous for adhesion. Both EP 1668084 A (SUN CHEMICAL) and US 7104642 (KONICA) address adhesion and disclose radiation curable inkjet inks comprising monofunctional monomers in amounts of 65 % by mass or more.

Another approach to improve adhesion is to modify the surface chemistry of the ink-receiver either by a pre-treatment such as flame, plasma or corona treatment or by applying a suitable surface layer, a so-called primer.

Corona discharge treatment and plasma treatment increase the cost, complexity and maintenance of the equipment used to process the substrates. Substrates may contain significant impurities or irregularities that may interfere with the treatment of the substrate, and hence not result to the uniform spreading and adhesion of ink. A corona discharge treatment for inkjet printing is exemplified by GB 2110598 A (NICC).

A primer can be applied in a number of ways prior to jetting the inkjet inks. A surface layer of the primer is usually coated and dried or cured before jetting the inkjet ink as, for example, in the inkjet printing processes of EP 1671805 A (AGFA) and US 2003021961 (3M), but it can also remain a wet, un-cured surface layer as in WO 00/30856 (XAAR).

Photoyellowing is a discoloration effect seen after curing due to decomposition of photoinitiators. This can be observed especially well for cyan and white radiation curable inks containing large amounts of thioxanthone type photoinitiators, which after printing and curing result in a greenish cyan respectively a yellowish white colour.

Migrateable residues in cured layers of inkjet ink on packaging of foodstuffs or pharmaceuticals may present a health risk and consequently they should be kept to an absolute minimum, i.e. within limits of applicable legislations such as the Swiss ordinance SR 817.023.21 on Objects and Materials.

UV-curable inks generally contain colorants, monomers, photoinitiators and polymerization synergists. A known measure to reduce migrateables and extractables of the photoinitiating system from cured ink layers is the use of diffusion hindered compounds, such as polymeric or polymerizable photoinitiators and co-initiators, instead of the usual low molecular weight compounds. For example, US 2006014852 (AGFA) discloses radiation curable inkjet inks comprising a photoreactive polymer comprising a dendritic polymer core with initiating and co-initiating functional groups as an end group. The dendritic polymeric architecture allows to obtain low migrateables and extractables while at the same time minimizing the increase in viscosity of the ink. The colorants used in curable inkjet inks can be dyes, but are generally colour pigments which together with a polymeric dispersant attached to the surface of the pigment are usually very difficult to extract. Specific monomers and compositions can be prepared for minimizing migrateable and extractable monomers after curing a layer of inkjet ink, as exemplified by EP 2053103 A (AGFA).

Additives like surfactants and polymerization inhibitors are used in small concentrations, hence the risk of exceeding migration limits is lower, but they can also be designed to have minimal contribution to migrateable and extractable compounds. For example, EP 2053101 A (AGFA) discloses several inkjet inks with an acrylated silicone surfactant in concentrations of 0.03 wt% based on the total weight of the ink. Also WO 2004/031308 A (GARLITO) and EP 2412768 A (FUJI) disclose radiation curable inkjet inks including silicone-based surfactants in small amounts.

In addition to all of the above constraints, an in-line inkjet printing process may also have to deal with specific processing steps, such as e.g. steam sterilization for removing micro-organisms in foodstuffs or pharmaceutical liquids already present in the packaging. It has been observed that state-of-the-art UV curable inkjet ink can be simply wiped off a polypropylene bag for intravenous (IV) therapy after steam sterilization. Inkjet printing can be performed after the steam sterilization, but this leads to extra complexity of the production line, since each IV bag must then be tagged with a unique identification number and after printing this unique number on the IV bag, the tag must then be removed. Such unique identification number is required by law in many countries for ensuring the traceability of the pharmaceutical liquids or foodstuffs.

JP H10 16926 A (ITO SEIMENSHIYO KK) discloses a device for detecting the presence of pinholes in packaging line which includes after heat sterilization, an ink jetting device 8 for marking defective packages. JP S64 1777 A (SAKURA COLOR PROD CORP) discloses an ink composition containing an organic solvent, a cyanine dye and a specific resin for indicating the sterilization of a canned drink.

Therefore, it would be desirable to have an industrial inkjet printing process that can be incorporated into production lines for foodstuffs and pharmaceuticals before a heat treatment like sterilization.

### Summary of invention

In order to overcome the problems described above, preferred embodiments of the present invention have been realised with a production method for foodstuffs and pharmaceuticals as defined by **claim 1.**

It was surprisingly found that steam sterilization could be performed on an inkjet printed polyolefin packaging when large amounts of an acrylated silicone surfactant were present in the radiation curable inkjet ink, while this was not the case for compounds advertised as adhesion promoters.

A (meth)acrylated silicone surfactant in a radiation curable inkjet ink could be advantageously used to ensure the traceability of a packaging including a substance for human or animal consumption or for human or animal administration.

Further objects of the invention will become apparent from the description hereinafter.

### Brief description of drawings

Figure 1 shows the front view of a prior art IV bag 11 with a temporary tag 13 attached to a hole 12.
Figure 2 shows the front view of an IV bag 21 wherein a tracking number 23 is printed on the outside surface of the IV bag 21 with a hole 22.

### Definitions

The term "alkyl" means all variants possible for each number of carbon atoms in the alkyl group i.e. methyl, ethyl, for three carbon atoms: n-propyl and isopropyl; for four carbon atoms: n-butyl, isobutyl and tertiary-butyl; for five carbon atoms: n-pentyl, 1,1-dimethyl-propyl, 2,2-dimethylpropyl and 2-methyl-butyl, etc.

Unless otherwise specified a substituted or unsubstituted alkyl group is preferably a C₁ to C₆-alkyl group.

Unless otherwise specified a substituted or unsubstituted alkenyl group is preferably a C₁ to C₆-alkenyl group.

Unless otherwise specified a substituted or unsubstituted alkynyl group is preferably a C₁ to C₆-alkynyl group.

Unless otherwise specified a substituted or unsubstituted aralkyl group is preferably phenyl group or naphthyl group including one, two, three or more C₁ to C₆-alkyl groups.

Unless otherwise specified a substituted or unsubstituted alkaryl group is preferably a C₁ to C₆-alkyl group including a phenyl group or naphthyl group.

Unless otherwise specified a substituted or unsubstituted aryl group is preferably a phenyl group or naphthyl group

Unless otherwise specified a substituted or unsubstituted heteroaryl group is preferably a five- or six-membered ring substituted by one, two or three oxygen atoms, nitrogen atoms, sulphur atoms, selenium atoms or combinations thereof.

The term "substituted", in e.g. substituted alkyl group means that the alkyl group may be substituted by other atoms than the atoms normally present in such a group, i.e. carbon and hydrogen. For example, a substituted alkyl group may include a halogen atom or a thiol group. An unsubstituted alkyl group contains only carbon and hydrogen atoms

Unless otherwise specified a substituted alkyl group, a substituted alkenyl group, a substituted alkynyl group, a substituted aralkyl group, a substituted alkaryl group, a substituted aryl and a substituted heteroaryl group are preferably substituted by one or more substituents selected from the group consisting of methyl, ethyl, n-propyl, isopropyl, n-butyl, isobutyl and tertiary-butyl, ester, amide, ether, thioether, ketone, aldehyde, sulfoxide, sulfone, sulfonate ester, sulphonamide, -Cl, -Br, -I, -OH, -SH, - CN and -NO₂.

### Inkjet Printing

The inkjet printing preferably includes the steps of: a) jetting a radiation curable inkjet ink on a polymeric surface wherein the polymer of the polymeric surface is selected from the group consisting of a polyolefin, a polyester and copolymers thereof; and b) curing the radiation curable inkjet ink on the polymeric surface; wherein the radiation curable inkjet ink includes at least 5 wt% of a (meth)acrylated silicone surfactant based on the total weight of the radiation curable inkjet ink; and wherein the viscosity of the radiation curable inkjet ink is smaller than 30 mPa.s at 25°C and at a shear rate of 1,000 s⁻¹.

The polymeric surface is preferably the outside surface of a packaging material, more preferably a packaging material for including a substance for human or animal consumption or administration. Such packaging material is usually cut, folded and glued into a packaging.

In a preferred embodiment, the polymeric surface is the outside surface of a packaging including a substance for human or animal consumption or administration.

In a particularly preferred embodiment, the inkjet printing includes, in order, the steps of:
a) jetting a radiation curable inkjet ink on the outside surface of a packaging including a substance for human or animal consumption or administration; b) curing the radiation curable inkjet ink on the outer surface of the packaging; and c) treating the radiation curable inkjet ink and the packaging including the substance with a heat treatment to kill micro-organisms present on the inside surface of a packaging, wherein the radiation curable inkjet ink includes at least 5 wt% of a (meth)acrylated silicone surfactant based on the total weight of the radiation curable inkjet ink.

The inkjet printing uses preferably a polymeric surface wherein the polymer is selected from the group consisting of polyethylene terephthalate, polyethylene, polypropylene and copolymers thereof, because a clear improvement in adhesion could be observed when a radiation curable inkjet ink including at least 5 wt% of a (meth)acrylated silicone surfactant was jetted thereon. Further improvement in adhesion was generally observed when a corona treatment or a plasma treatment was applied to the polymeric surface before the jetting step a).

Corona discharge and plasma treatments are well-known to a person skilled in the art of printing for improving wettability or surface energy of polymer films to make them more compatible with adhesives or printing inks. An atmospheric plasma treatment is preferred over a chemical plasma treatment and certainly over a flame plasma treatment since the latter requires higher temperatures wherein many packaging materials that are treated with a flame plasma get damaged.

The radiation curable inkjet ink may be jetted by one or more printing heads ejecting small droplets of ink in a controlled manner through nozzles onto the polymeric surface, which is moving relative to the printing head(s). A preferred printing head for the inkjet printing system is a piezoelectric head. Piezoelectric inkjet printing is based on the movement of a piezoelectric ceramic transducer when a voltage is applied thereto. The application of a voltage changes the shape of the piezoelectric ceramic transducer in the printing head creating a void, which is then filled with ink. When the voltage is again removed, the ceramic expands to its original shape, ejecting a drop of ink from the print head. However the inkjet printing according to the present invention is not restricted to piezoelectric inkjet printing. Other inkjet printing heads can be used and include various types, such as a continuous type and thermal, electrostatic and acoustic drop on demand type.

The inkjet print head normally scans back and forth in a transversal direction across the moving polymeric surface. However in a preferred embodiment, the inkjet printing according to the present invention is performed by a so-called single pass printing process. This can be accomplished by using page wide inkjet print heads or multiple staggered inkjet print heads which cover the entire width of the ink-receiving polymeric surface. In a single pass printing process the inkjet print heads usually remain stationary and the ink-receiving polymeric surface is transported under the inkjet print heads.

The radiation curable inkjet ink may be cured by actinic radiation selected preferably from the group consisting of UV radiation, infrared radiation, electron beam and combinations thereof. The radiation curable inkjet ink is preferably cured by electron beam curing if no initiator is present in the radiation curable inkjet ink. The radiation curable inkjet ink is preferably cured by UV radiation if a photoinitiator or photoinitiating system is present in the radiation curable inkjet ink.

The curing means may be arranged in combination with the print head of the inkjet printer, travelling therewith so that the radiation curable inkjet ink is exposed to curing radiation very shortly after been jetted.

Any ultraviolet light source, as long as part of the emitted light can be absorbed by the photoinitiator or photoinitiator system, may be employed as a radiation source, such as, a high or low pressure mercury lamp, a cold cathode tube, a black light, an ultraviolet LED, an ultraviolet laser, and a flash light. Of these, the preferred source is one exhibiting a relatively long wavelength UV-contribution having a dominant wavelength of 300-400 nm. Specifically, a UV-A light source is preferred due to the reduced light scattering therewith resulting in more efficient interior curing.

UV radiation is generally classed as UV-A, UV-B, and UV-C as follows:
- UV-A: 400 nm to 320 nm
- UV-B: 320 nm to 290 nm
- UV-C: 290 nm to 100 nm.

Two or more light sources of the same wavelength or illuminance can be used, but it is also possible to cure the image using, consecutively or simultaneously, two or more light sources of differing wavelength or illuminance. For example, the first UV-source can be selected to be rich in UV-C, in particular in the range of 260 nm-200 nm. The second UV-source can then be rich in UV-A, e.g. a gallium-doped lamp, or a different lamp high in both UV-A and UV-B. The use of two UV-sources has been found to have advantages e.g. a fast curing speed.

In a particular preferred embodiment, the radiation curable inkjet ink on the polymeric surface is cured by UV radiation, more preferably by UV radiation emitted by one or more light emitting diodes (UV-LEDs) or lasers.

For facilitating curing, the inkjet printer may include one or more oxygen depletion units. The oxygen depletion units place a blanket of nitrogen or other relatively inert gas like CO₂, with adjustable position and adjustable inert gas concentration, in order to reduce the oxygen concentration in the curing environment. Residual oxygen levels are usually maintained as low as 200 ppm, but are generally in the range of 200 ppm to 1200 ppm.

Thermal curing can be performed image-wise by use of a thermal head, a heat stylus, hot stamping, a laser beam, etc. If a laser beam is used, then preferably an infrared laser is used in combination with an infrared absorber in the curable ink.

When electron beams are employed, the exposure amount of the aforesaid electron beam is preferably controlled to be in the range of 0.1-20 Mrad. An exposure amount of not less than 0.1 Mrad does not result in sufficient curing of the curable inkjet inks. An exposure amount of more than 20 Mrad is not preferred because in order to avoid deterioration of supports, especially paper and certain type of plastics. Preferred electron beam exposure systems are a scanning system, a curtain beam system, and a broad beam system. Appropriate acceleration voltage during electron beam exposure is 100-300 kV. The most important advantage of using an electron beam exposure system, compared to the ultraviolet radiation exposure, is that for printing on packaging materials curable inks lacking an initiator can be used. Hence, no toxicological problems can occur due to extraction of the initiator.

The preparation of injectable medications and intravenous solutions requires a high sterility assurance level (SAL). Also in food processing it is often required to eliminate microbial life for food safety. The preferred technique is usually some kind of heat treatment, optionally in combination with chemicals or irradiation.

Sterilization refers to any process that eliminates or kills all forms of microbial life, including transmissible agents such as fungi, bacteria, viruses and spore forms present on a surface, contained in a fluid, in medication or in a compound.

In the inkjet printing according to the present invention, the heat treatment is preferably a moist heat sterilization. The presence of moisture in sterilization significantly speeds up heat penetration compared to using dry heat. A widely-used method for heat sterilization is an autoclave using steam heated to 121-134 °C. To achieve sterility, a holding time of at least 15 minutes at 121 °C or 3 minutes at 134 °C is generally required. The moisture in moist heat sterilization is preferably steam, since other solvents may present health risks.

Ultra-high temperature processing (UHT) is the sterilization of food by heating it for an extremely short period, around 1-2 seconds, at a temperature exceeding 135°C, which is the temperature required to kill spores in milk. The most common UHT product is milk, but the process is also used for fruit juices, cream, soy milk, yogurt, wine, soups, and stews.

The above temperature conditions result that common UV curable inkjet inks can be wiped off from substrates like polypropylene used for IV bags after they have undergone such severe heat treatment.

### Packaging and Substances

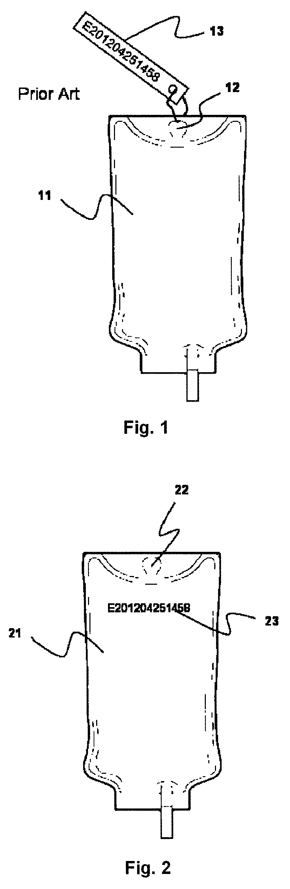

Intravenous therapy is the infusion of liquid substances directly into a vein, and is used, for example, to correct electrolyte imbalances or to deliver medications. These liquid substances are usually contained by a polypropylene bag 11 as shown in Figure 1. A temporary tag 13 is attached to the hole 12 during production of the IV bag for tracking all movement of the product and steps within the production process. One of the key reasons this is such a critical point is in instances where an issue of contamination or error in production arises, and a recall is required. Similar traceability is also required in food processing, especially for meat processing and fresh produce processing.

The term traceability refers to the recording through means of, for example, barcodes and identification numbers for all movement of product and steps within the production process.

In traditional production of an IV bag as shown in Figure 1, the temporary tag 13 is removed after heat treatment and the corresponding number or barcode on the temporary tag is printed onto the IV bag. Apart from making the production process more complicated and expensive, also errors may occur wherein the number of the tag is printed on the wrong IV bag. By printing the tracking number 23 on an IV bag 21 in a very early stage before the heat treatment, errors are minimized and the production process is simplified. The hole 22, used for hanging the IV bag on a stand, can also not get damaged in production by attaching and detaching the temporary tag.

In one embodiment, the inkjet printing is performed with a substance for human or animal consumption or administration already present in the packaging.

There is no real limitation on the type of substance. It is preferably a liquid, a solid or a mixture thereof but may include a gas like air, oxygen or CO₂. The substance can be consumed by humans or animals, such as foods, but it can also be administered to humans or animals, for example by intramuscular or intravenous injection for medical reasons.

The radiation curable inkjet ink adheres very well to a polymeric surface wherein the polymer is selected from the group consisting of a polyolefin and a polyester, and particularly well to a polymeric surface wherein the polymer is selected from the group consisting of polyethylene terephthalate, polyethylene, polypropylene and copolymers thereof, but it adheres also very well on less critical substrates like polyvinyl chlorides and polyamides. The largest improvement in adhesion quality, especially after steam sterilization, has been observed for a polymeric surface wherein the polymer is selected from the group consisting of polyethylene, polypropylene and copolymers thereof.

### Radiation Curable Inkjet Inks

The radiation curable inkjet ink is preferably a free radical curable inkjet ink.

A preferred radiation curable inkjet ink for the inkjet printing according to the present invention includes a polymerizable or polymeric thioxanthone photoinitiator; and at least 5 wt% of a (meth)acrylated silicone surfactant based on the total weight of the radiation curable inkjet ink. In a more preferred embodiment, the radiation curable inkjet ink further includes an acylphosphine oxide-based polymerization photoinitiator. The acylphosphine oxide-based polymerization photoinitiator is preferably a bis(2,4,6-trimethylbenzoyl)-phenylphosphineoxide photoinitiator.

Intravenous bags are usually made of transparent polyolefin. The radiation curable inkjet ink used on such a transparent packaging material is preferably a black ink. It has been observed that readability of text on the transparent packaging material and the scannability of a barcode were enhanced when the radiation curable inkjet ink included a black pigment and a cyan, magenta and/or red pigment.

In a preferred embodiment of the inkjet printing, the radiation curable inkjet ink includes a vinyl ether acrylate.

In a preferred embodiment, the radiation curable inkjet ink includes a polymerizable or polymeric tertiary amine co-initiator.

The surface tension of the radiation curable inkjet ink is preferably from 20 to 30 mN/m, more preferably from 22 to 28 mN/m. It is preferably 20 mN/m or more from the viewpoint of printability by a second radiation curable inkjet ink, and it is preferably not more than 30 mN/m from the viewpoint of the wettability.

For having a good ejecting ability, the viscosity of the inkjet ink at the jetting temperature is preferably smaller than 30 mPa.s, more preferably smaller than 15 mPa.s, and most preferably between 1 and 10 mPa.s at a shear rate of 1,000 s⁻¹ and a jetting temperature between 10 and 70°C.

The viscosity of the radiation curable inkjet ink is smaller than 30 mPa.s, preferably smaller than 28 mPa.s, and most preferably between 1 and 25 mPa.s at 25°C and at a shear rate of 1,000 s⁻¹.

### (Meth)acrylated Silicone Surfactants

Surfactants can, depending on their chemical and physical properties, normally be used in small quantities of less than 2 wt% based on the total weight of the inkjet ink. This is especially true for silicone type surfactants since they are very effective in reducing the surface tension of an inkjet ink.

In the present invention, the (meth)acrylated silicone surfactant is used in an amount of at least 5 wt% based on the total weight of the radiation curable inkjet ink.

In a more preferred embodiment, the (meth)acrylated silicone surfactant is used in a range of 5 wt% to 20 wt%, more preferably 6 wt% to 18 wt% and most preferably 8 wt% to 16 w% based on the total weight of the radiation curable inkjet ink. In an amount of less than 5 wt%, the (meth)acrylated silicone surfactant only works as surfactant ensuring good spreading of the inkjet ink and does not improve adhesion. In an amount of 2.0 wt% or more, the adhesion of a second inkjet ink on the first inkjet ink becomes problematic.

It is also imperative that the silicone surfactant is a polymerizable compound of sufficient reactivity. Therefore the polymerizable silicone surfactant is a (meth)acrylated silicone surfactant. Most preferably the (meth)acrylated silicone surfactant is an acrylated silicone surfactant, because acrylates are more reactive than methacrylates.

The (meth)acrylated silicone surfactant may be alkoxylated, polyester modified, polyether modified, polyether modified hydroxy functional, amine modified, epoxy modified and other modifications or combinations thereof.

In a preferred embodiment, the (meth)acrylated silicone surfactant is a polyether modified (meth)acrylated silicone surfactant, more preferably a polyether modified acrylated silicone surfactant.

In a preferred embodiment, the (meth)acrylated silicone surfactant is a polyether modified acrylated polydimethylsiloxane or a polyester modified acrylated polydimethylsiloxane.

A preferred (meth)acrylated silicone surfactant is represented by the compound of Formula (I): 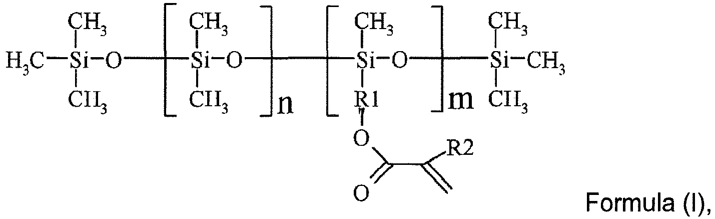 wherein
n and m represent integers independently selected from the range 3 to 300;
R1 represents an alkyl group, an ethoxy group, polyethoxy group, a propoxy group or polypropoxy group; and
R2 represents a methyl or hydrogen, most preferably a hydrogen. In a preferred embodiment R1 represents a propyl group

Another preferred (meth)acrylated silicone surfactant is represented by the compound of Formula (II): 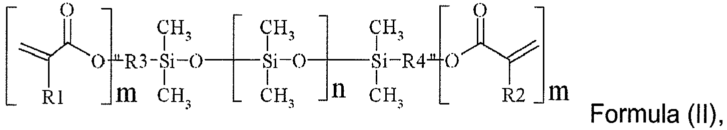 wherein
n and m represent integers independently selected from the range 3 to 300;
R1 and R2 represent a methyl or hydrogen, most preferably a hydrogen;
and R4 represents an alkyl group, an ethyleneoxide group, polyethyleneoxide group, a propoxy group or 2-hydroxypropoxypropyl, polypropyleneoxide group.

Another preferred acrylated silicone surfactant is represented by a compound including a plurality of groups selected from: 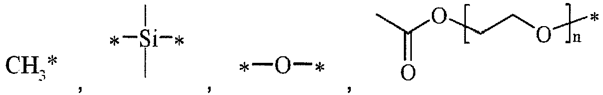 and 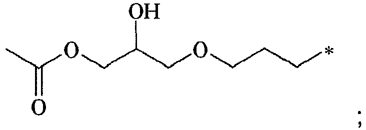 and at least one group selected from: 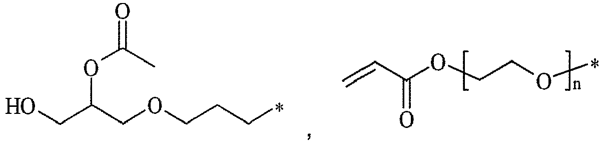 and 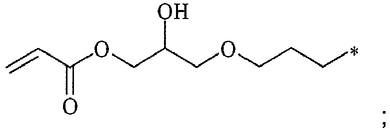 wherein the * indicates where two groups can be covalently bonded.

The content of the (meth)acrylate group in (meth)acrylated silicone surfactant is preferably 1 to 30 wt% based on the total weight of the (meth)acrylated silicone surfactant.

In one embodiment, the (meth)acrylated silicone surfactant includes only 1 or 2 to 10 (meth)acrylate groups.

The (meth)acrylated silicone surfactant may contain one or more fluorine-substituted hydrocarbon groups, but preferably does not include any fluorine group.

The molecular weight of the (meth)acrylated silicone surfactant is preferably no more than 25,000, more preferably no more than 10,000 and most preferably no more than 6,000.

Preferred commercially available (meth)acrylated silicone surfactants include: Ebecryl™ 350 , a silicone diacrylate from Cytec; the polyether modified acrylated polydimethylsiloxane BYK™ UV3500 and BYK™ UV3530, the polyester modified acrylated polydimethylsiloxane BYK™ UV3570, all manufactured by BYK Chemie; Tego™ Rad 2100, Tego™ Rad 2200N, Tego™ Rad 2250N, Tego™ Rad 2300, Tego™ Rad 2500, Tego™ Rad 2600, and Tego™ Rad 2700, Tego™ RC711 from EVONIK; Silaplane™ FM7711, Silaplane™ FM7721, Silaplane™ FM7731, Silaplane™ FM0711, Silaplane™ FM0721, Silaplane™ FM0725, Silaplane™ TM0701, Silaplane™ TM0701 T all manufactured by Chisso Corporation; and DMS-R05, DMS-R11, DMS-R18, DMS-R22, DMS-R31, DMS-U21, DBE-U22, SIB1400, RMS-044, RMS-033, RMS-083, UMS-182, UMS-992, UCS-052, RTT-1011 and UTT-1012 all manufactured by Gelest, Inc..

The (meth)acrylated silicone surfactant preferably has a viscosity at 25°C of no more than 3,000 mPa.s, more preferably of no more than 2,000 mPa.s and most preferably between 100 and 1,000 mPa.s all measured at 25°C and at a shear rate of 1,000 s⁻¹. A too high viscosity of (meth)acrylated silicone surfactant will increase the viscosity of the radiation curable inkjet inks to a level that the printing speed has to be reduced.

### Other Surfactants

In addition to the (meth)acrylated silicone surfactant, the radiation curable inkjet ink may contain at least one other type of surfactant. The surfactant can be anionic, cationic, non-ionic, or zwitter-ionic and is usually added in a total quantity less than 2 wt% based on the total weight of the ink and particularly in a total less than 1wt% based on the total weight of the ink.

Suitable surfactants include fluorinated surfactants, fatty acid salts, ester salts of a higher alcohol, alkylbenzene sulfonate salts, sulfosuccinate ester salts and phosphate ester salts of a higher alcohol (for example, sodium dodecylbenzenesulfonate and sodium dioctylsulfosuccinate), ethylene oxide adducts of a higher alcohol, ethylene oxide adducts of an alkylphenol, ethylene oxide adducts of a polyhydric alcohol fatty acid ester, and acetylene glycol and ethylene oxide adducts thereof (for example, polyoxyethylene nonylphenyl ether, and SURFYNOL™ 104, 104H, 440, 465 and TG available from AIR PRODUCTS & CHEMICALS INC.).

Preferred surfactants are selected from fluoro surfactants (such as fluorinated hydrocarbons) and silicone surfactants. The silicone surfactants are preferably siloxanes and can be alkoxylated, polyether modified, polyether modified hydroxy functional, amine modified, epoxy modified and other modifications or combinations thereof. Preferred siloxanes are polymeric, for example polydimethylsiloxanes.

Preferred commercial silicone surfactants include BYK™ 333 and BYK™ UV3510 from BYK Chemie.

### Polymerizable Compounds

The radiation curable inkjet ink for the inkjet printing according to the present invention includes preferably a free radical polymerizable compound. A combination of monomers, oligomers and/or prepolymers may also be used and they may possess different degrees of functionality. A mixture including combinations of mono-, di-, tri-and higher functionality monomers, oligomers and/or prepolymers may be used. The viscosity of the inkjet ink can be adjusted by varying the ratio between the monomers and oligomers. Particularly preferred monomers and oligomers are those listed in [0106] to [0115] of EP 1911814 A (AGFA).

For achieving high printing speeds, low viscous monomers are used so that a low viscosity for the radiation curable inkjet ink can be obtained. A popular low viscosity monomer is tetrahydrofurfuryl (meth)acrylate. However, in industrial inkjet printing also a high reliability is required which allows the incorporation of the inkjet printing system into a production line.

It was found that a vessel of tetrahydrofurfuryl acrylate kept at 40°C for 100 hours lost 40% of its weight. Printing heads often operate at temperatures of about 40 to 45°C. A high evaporation of tetrahydrofurfuryl (meth)acrylate from a print head nozzle during a stand-by mode from the inkjet printer leads to an unacceptable increase in viscosity of the inkjet ink in the print head and subsequently to jetting failures of the print head (bad latency). In a preferred embodiment, radiation curable inkjet ink does not include tetrahydrofurfuryl (meth)acrylate.

The radiation curable inkjet ink preferably uses low viscosity monomers exhibiting small evaporation rates. For example, 2- (2-vinyloxyethoxy)ethyl acrylate (VEEA) kept at 40°C for 100 hours loses only 8% of its weight.

In a preferred embodiment, the monomers in the radiation curable inkjet ink which have a viscosity of less than 15 mPa.s at 25°C and at a shear rate of 1,000 s⁻¹, lose less than 15 % of their weight when kept at 40°C for 100 hours in an open cubic vessel.

Another advantage of VEEA is that it is a bifunctional monomer having two different polymerizable groups, namely an acrylate group and an ether group. This allows a better control of the polymerization rate, whereby the amount of extractable and migrateable monomer is reduced.

In a preferred embodiment, the radiation curable inkjet ink includes a monomer including at least one acrylate group and at least one ethylenically unsaturated polymerizable group selected from the group consisting of allylether, allylester, allylcarbonate, vinyl ether, vinylester, vinylcarbonate, fumarate, and maleate. Suitable examples are disclosed in EP 2053101 A (AGFA).

In a preferred embodiment, the polymerizable composition of the radiation curable inkjet ink consists essentially of: a) 25 - 100 wt% of one or more polymerizable compounds A having at least one acrylate group and at least one second ethylenically unsaturated polymerizable functional group selected from the group consisting of a vinyl ether group, an allylether group and a allylester group; b) 0 - 55 wt% of one or more polymerizable compounds B selected from the group consisting of monofunctional acrylates and difunctional acrylates; and c) 0 - 55 wt% of one or more polymerizable compounds C selected from the group consisting of trifunctional acrylates, tetrafunctional acrylates, pentafunctional acrylates and hexafunctional acrylates, with the proviso that if the weight percentage of compounds B > 24 wt%, then the weight percentage of compounds C > 1 wt%; and wherein all weight percentages of A, B and C are based upon the total weight of the polymerizable composition; and with the proviso that at least one polymerizable compound B or C is present in the polymerizable composition if the free radical curable inkjet ink contains no initiator.

The radiation curable inkjet ink preferably includes a vinyl ether acrylate. A preferred class of monomers and oligomers are vinyl ether acrylates such as those described in EP 0997508 A (AGFA). Particularly preferred monomers are 2- (2-vinyloxyethoxy)ethyl (meth)acrylate, most preferably the monomer is 2- (2-vinyloxyethoxy)ethyl acrylate.

The monomers and oligomers used in radiation curable inkjet inks are preferably purified compounds having no or almost no impurities, more particularly no carcinogenic, mutagenic or reprotoxic impurities. The impurities are usually derivative compounds obtained during synthesis of the polymerizable compound. Sometimes, however, some compounds may be added deliberately to pure polymerizable compounds in harmless amounts, for example, polymerization inhibitors or stabilizers.

The radiation curable inkjet ink preferably includes 60 to 95 wt% of polymerizable compounds, more preferably 70 to 90 wt% of polymerizable compounds based upon the total weight of the radiation curable inkjet ink.

### Photoinitiators and Co-Initiators

The radiation curable inkjet ink preferably also contains an initiator. The initiator typically initiates the polymerization reaction. The initiator can be a thermal initiator, but is preferably a photoinitiator. The photoinitiator requires less energy to activate than the monomers, oligomers and/or prepolymers to form a polymer.

The photoinitiator in the curable inkjet ink is preferably a free radical initiator, more specifically a Norrish type I initiator or a Norrish type II initiator. A free radical photoinitiator is a chemical compound that initiates polymerization of monomers and oligomers when exposed to actinic radiation by the formation of a free radical. A Norrish Type I initiator is an initiator which cleaves after excitation, yielding the initiating radical immediately. A Norrish type II-initiator is a photoinitiator which is activated by actinic radiation and forms free radicals by hydrogen abstraction from a second compound that becomes the actual initiating free radical. This second compound is called a polymerization synergist or co-initiator. Both type I and type II photoinitiators can be used in the present invention, alone or in combination.

Suitable photoinitiators are disclosed in CRIVELLO, J.V., et al. VOLUME III: Photoinitiators for Free Radical Cationic. 2nd edition. Edited by BRADLEY, G.. London,UK: John Wiley and Sons Ltd, 1998. p.287-294.

Specific examples of photoinitiators may include, but are not limited to, the following compounds or combinations thereof: benzophenone and substituted benzophenones, 1-hydroxycyclohexyl phenyl ketone, thioxanthones such as isopropylthioxanthone, 2-hydroxy-2-methyl-1-phenylpropan-1-one, 2-benzyl-2-dimethylamino- (4-morpholinophenyl) butan-1-one, benzil dimethylketal, bis (2,6- dimethylbenzoyl) -2,4, 4-trimethylpentylphosphine oxide, 2,4,6trimethylbenzoyldiphenylphosphine oxide, 2-methyl-1- [4- (methylthio) phenyl] -2-morpholinopropan-1-one, 2,2-dimethoxy-1, 2-diphenylethan-1-one or 5,7-diiodo-3- butoxy-6-fluorone.

Suitable commercial photoinitiators include Irgacure™ 184, Irgacure™ 500, Irgacure™ 369, Irgacure™ 1700, Irgacure™ 651, Irgacure™ 819, Irgacure™ 1000, Irgacure™ 1300, Irgacure™ 1870, Darocur™ 1173, Darocur™ 2959, Darocur™ 4265 and Darocur™ ITX available from CIBA SPECIALTY CHEMICALS, Lucerin™ TPO available from BASF AG, Esacure™ KT046, Esacure™ KIP150, Esacure™ KT37 and Esacure™ EDB available from LAMBERTI, H-Nu™ 470 and H-Nu™ 470X available from SPECTRA GROUP Ltd..

For a low migration radiation curable inkjet ink, the photoinitiator is preferably a so-called diffusion hindered photoinitiator. A diffusion hindered photoinitiator is a photoinitiator which exhibits a much lower mobility in a cured layer of the ink than a monofunctional photoinitiator, such as benzophenone. Several methods can be used to lower the mobility of the photoinitiator. One way is to increase the molecular weight of the photoinitiators so that the diffusion speed is reduced, e.g. polymeric photoinitiators. Another way is to increase its reactivity so that it is built into the polymerizing network, e.g. multifunctional photoinitiators (having 2, 3 or more photoinitiating groups) and polymerizable photoinitiators.

The diffusion hindered photoinitiator is preferably selected from the group consisting of non-polymeric multifunctional photoinitiators, oligomeric or polymeric photoinitiators and polymerizable photoinitiators. Non-polymeric di- or multifunctional photoinitiators are considered to have a molecular weight between 300 and 900 Dalton. Non-polymerizable monofunctional photoinitiators with a molecular weight in that range are not diffusion hindered photoinitiators. Most preferably the diffusion hindered photoinitiator is a polymerizable initiator or a polymeric photoinitiator.

A preferred diffusion hindered photoinitiator contains one or more photoinitiating functional groups derived from a Norrish type I-photoinitiators elected from the group consisting of benzoinethers, benzil ketals, α,α-dialkoxyacetophenones, α-hydroxyalkylphenones, α-aminoalkylphenones, acylphosphine oxides, acylphosphine sulphides, α-haloketones, α-halosulfones and phenylglyoxalates.

A preferred diffusion hindered photoinitiator contains one or more photoinitiating functional groups derived from a Norrish type II-initiator selected from the group consisting of benzophenones, thioxanthones, 1,2-diketones and anthraquinones.

Suitable diffusion hindered photoinitiators are also those disclosed in EP 2065362 A (AGFA) in paragraphs [0074] and [0075] for difunctional and multifunctional photoinitiators, in paragraphs [0077] to [0080] for polymeric photoinitiators and in paragraphs [0081] to [0083] for polymerizable photoinitiators.

Other preferred polymerizable photoinitiators are those disclosed in EP 2161264 A (AGFA). A preferred amount of photoinitiator is 0 - 50 wt%, more preferably 0.1 - 20 wt%, and most preferably 0.3 - 15 wt% of the total weight of the curable ink.

In a very preferred embodiment, the radiation curable inkjet ink includes a polymerizable or polymeric thioxanthone photoinitiator and an acylphosphine oxide-based polymerization photoinitiator, more preferably a bis(2,4,6-trimethylbenzoyl)-phenylphosphineoxide photoinitiator.

Photoinitiators like bis(2,4,6-trimethylbenzoyl)-phenylphosphineoxide photoinitiator are monofunctional but are allowed by the Swiss ordinance SR 817.023.21 on Objects and Materials due to their very low toxicity level.

In order to increase the photosensitivity further, the radiation curable ink may additionally contain co-initiators. Suitable examples of co-initiators can be categorized in three groups: 1) tertiary aliphatic amines such as methyldiethanolamine, dimethylethanolamine, triethanolamine, triethylamine and N-methylmorpholine; (2) aromatic amines such as amylparadimethylaminobenzoate, 2-n-butoxyethyl-4-(dimethylamino) benzoate, 2-(dimethylamino)ethylbenzoate, ethyl-4-(dimethylamino)benzoate, and 2-ethylhexyl-4-(dimethylamino)benzoate; and (3) (meth)acrylated amines such as dialkylamino alkyl(meth)acrylates (e.g., diethylaminoethylacrylate) or N-morpholinoalkyl-(meth)acrylates (e.g., N-morpholinoethyl-acrylate).

The preferred co-initiators are aminobenzoates.

When one or more co-initiators are included into the radiation curable ink, preferably these co-initiators are diffusion hindered for safety reasons.

A diffusion hindered co-initiator is preferably selected from the group consisting of non-polymeric di- or multifunctional co-initiators, oligomeric or polymeric co-initiators and polymerizable co-initiators. More preferably the diffusion hindered co-initiator is selected from the group consisting of polymeric co-initiators and polymerizable co-initiators. Most preferably the diffusion hindered co-initiator is a polymerizable co-initiator having at least one (meth)acrylate group, more preferably having at least one acrylate group.

The radiation curable inkjet ink preferably includes a polymerizable or polymeric tertiary amine co-initiator.

Preferred diffusion hindered co-initiators are the polymerizable co-initiators disclosed in EP 2053101 A (AGFA) in paragraphs [0088] and [0097].

Preferred diffusion hindered co-initiators include a polymeric co-initiator having a dendritic polymeric architecture, more preferably a hyperbranched polymeric architecture. Preferred hyperbranched polymeric co-initiators are those disclosed in US 2006014848 (AGFA).

The radiation curable inkjet ink preferably includes the diffusion hindered co-initiator in an amount of 0.1 to 50 wt%, more preferably in an amount of 0.5 to 25 wt%, most preferably in an amount of 1 to 10 wt% of the total weight of the inkjet ink.

### Polymerization Inhibitors

The radiation curable inkjet ink may contain a polymerization inhibitor. Suitable polymerization inhibitors include phenol type antioxidants, hindered amine light stabilizers, phosphor type antioxidants, hydroquinone monomethyl ether commonly used in (meth)acrylate monomers, and hydroquinone, t-butylcatechol, pyrogallol may also be used.

Suitable commercial inhibitors are, for example, Sumilizer™ GA-80, Sumilizer™ GM and Sumilizer™ GS produced by Sumitomo Chemical Co. Ltd.; Genorad™ 16, Genorad™ 18 and Genorad™ 20 from Rahn AG; Irgastab™ UV10 and Irgastab™ UV22, Tinuvin™ 460 and CGS20 from Ciba Specialty Chemicals; Floorstab™ UV range (UV-1, UV-2, UV-5 and UV-8) from Kromachem Ltd, Additol™ S range (S100, S110, S120 and S130) from Cytec Surface Specialties.

Since excessive addition of these polymerization inhibitors will lower the ink sensitivity to curing, it is preferred that the amount capable of preventing polymerization is determined prior to blending. The amount of a polymerization inhibitor is preferably lower than 2 wt% of the total (inkjet) ink.

### Colorants

The radiation curable inkjet ink can be a clear radiation curable inkjet ink, but preferably it includes at least one colorant. The colorant is preferably a dye or a pigment, most preferably a pigment.

The pigments may be black, white, cyan, magenta, yellow, red, orange, violet, blue, green, brown, mixtures thereof, and the like. A colour pigment may be chosen from those disclosed by HERBST, Willy, et al. Industrial Organic Pigments, Production, Properties, Applications. 3rd edition. Wiley - VCH, 2004. ISBN 3527305769.

Preferred pigments are disclosed in paragraphs [0128] to [0138] **of** WO 2008/074548 (AGFA) .

Preferred pigments include as red or magenta pigments, Pigment Red 3, 5, 19, 22, 31, 38, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, 257, Pigment Violet 3, 19, 23, 29, 30, 37, 50, 88, Pigment Orange 13, 16, 20, 36, as blue or cyanogen pigments, Pigment Blue 1, 15, 15:1, 15:2, 15:3, 15:4, 15:6, 16, 17-1, 22, 27, 28, 29, 36, 60, as green pigments, Pigment Green 7, 26, 36, 50, as yellow pigments, Pigment Yellow 1, 3, 12, 13, 14, 17, 34, 35, 37, 55, 74, 81, 83, 93, 94, 95, 97, 108, 109, 110, 137, 138, 139, 153, 154, 155, 157, 166, 167, 168, 180, 185, 193, as black pigments, Pigment Black 7, 28, 26, as white pigments, Pigment White 6, 18 and 21.

Also mixed crystals may be used. Mixed crystals are also referred to as solid solutions. For example, under certain conditions different quinacridones mix with each other to form solid solutions, which are quite different from both physical mixtures of the compounds and from the compounds themselves. In a solid solution, the molecules of the components enter into the same crystal lattice, usually, but not always, that of one of the components. The x-ray diffraction pattern of the resulting crystalline solid is characteristic of that solid and can be clearly differentiated from the pattern of a physical mixture of the same components in the same proportion. In such physical mixtures, the x-ray pattern of each of the components can be distinguished, and the disappearance of many of these lines is one of the criteria of the formation of solid solutions. A commercially available example is Cinquasia™ Magenta RT-355-D from Ciba Specialty Chemicals.

Also mixtures of pigments may be used. For example, the radiation curable inkjet ink includes a black pigment and at least one pigment selected from the group consisting of a blue pigment, a cyan pigment, magenta pigment and a red pigment. It was found that such a black inkjet ink was better readable and scannable on a transparent polypropylene infusion bag.

Pigment particles in inkjet inks should be sufficiently small to permit free flow of the ink through the inkjet-printing device, especially at the ejecting nozzles. It is also desirable to use small particles for maximum colour strength and to slow down sedimentation.

The numeric average pigment particle size is preferably between 0.050 and 1 µm, more preferably between 0.070 and 0.300 µm and particularly preferably between 0.080 and 0.200 µm. Most preferably, the numeric average pigment particle size is no larger than 0.150 µm. An average particle size smaller than 0.050 µm is less desirable for decreased fastness, but mainly also because very small pigment particles or individual pigment molecules thereof may still migrate into the food packaging applications. The average particle size of pigment particles is determined with a Brookhaven Instruments Particle Sizer BI90plus based upon the principle of dynamic light scattering. The ink is diluted with ethyl acetate to a pigment concentration of 0.002 wt%. The measurement settings of the BI90plus are: 5 runs at 23°C, angle of 90°, wavelength of 635 nm and graphics = correction function

However for white pigment inkjet inks, the numeric average particle diameter of the white pigment is preferably from 50 to 500 nm, more preferably from 150 to 400 nm, and most preferably from 200 to 350 nm. Sufficient hiding power cannot be obtained when the average diameter is less than 50 nm, and the storage ability and the jet-out suitability of the ink tend to be degraded when the average diameter exceeds 500 nm. The determination of the numeric average particle diameter is best performed by photon correlation spectroscopy at a wavelength of 633 nm with a 4mW HeNe laser on a diluted sample of the pigmented inkjet ink. A suitable particle size analyzer used was a Malvern™ nano-S available from Goffin-Meyvis. A sample can, for example, be prepared by addition of one drop of ink to a cuvette containing 1.5 mL ethyl acetate and mixed until a homogenous sample was obtained. The measured particle size is the average value of 3 consecutive measurements consisting of 6 runs of 20 seconds.

Suitable white pigments are given by Table 2 in [0116] of WO 2008/074548 (AGFA). The white pigment is preferably a pigment with a refractive index greater than 1.60. The white pigments may be employed singly or in combination. Preferably titanium dioxide is used as pigment with a refractive index greater than 1.60. Preferred titanium dioxide pigments are those disclosed in [0117] and in [0118] of WO 2008/074548 (AGFA).

The pigments are preferably present in the range of 0.01 to 15 %, more preferably in the range of 0.05 to 10 % by weight and most preferably in the range of 0.1 to 8 % by weight, each based on the total weight of the pigment dispersion. For white pigment dispersions, the white pigment is preferably present in an amount of 3% to 40% by weight of the pigment dispersion, and more preferably 5% to 35%. An amount of less than 3% by weight cannot achieve sufficient covering power and usually exhibits very poor storage stability and ejection property.

The radiation curable inkjet ink may be part of an inkjet ink set. The inkjet ink set preferably comprises at least one yellow curable ink (Y), at least one cyan curable ink (C) and at least one magenta curable ink (M) and preferably also at least one black curable ink (K). The curable CMYK-ink set may also be extended with extra inks such as red, green, blue, and/or orange to further enlarge the colour gamut of the image. The CMYK-ink set may also be extended by the combination of the full density inkjet inks with light density inkjet inks. The combination of dark and light colour inks and/or black and grey inks improves the image quality by a lowered graininess.

### Polymeric Dispersants

The radiation curable inkjet ink preferably contains a dispersant, more preferably a polymeric dispersant, for dispersing the pigment. The pigmented radiation curable inkjet ink may contain a dispersion synergist to improve the dispersion quality and stability of the ink. A mixture of dispersion synergists may be used to further improve dispersion stability.

Suitable polymeric dispersants are copolymers of two monomers but they may contain three, four, five or even more monomers. The properties of polymeric dispersants depend on both the nature of the monomers and their distribution in the polymer. Copolymeric dispersants preferably have the following polymer compositions:
- statistically polymerized monomers (e.g. monomers A and B polymerized into ABBAABAB);
- alternating polymerized monomers (e.g. monomers A and B polymerized into ABABABAB);
- gradient (tapered) polymerized monomers (e.g. monomers A and B polymerized into AAABAABBABBB);
- block copolymers (e.g. monomers A and B polymerized into AAAAABBBBBB) wherein the block length of each of the blocks (2, 3, 4, 5 or even more) is important for the dispersion capability of the polymeric dispersant;
- graft copolymers (graft copolymers consist of a polymeric backbone with polymeric side chains attached to the backbone); and
- mixed forms of these polymers, e.g. blocky gradient copolymers.

Suitable polymeric dispersants are listed in the section on "Dispersants", more specifically [0064] to [0070] and [0074] to [0077], in EP 1911814 A (AGFA).

The polymeric dispersant has preferably a number average molecular weight Mn between 500 and 30000, more preferably between 1500 and 10000.

The polymeric dispersant has preferably a weight average molecular weight Mw smaller than 100,000, more preferably smaller than 50,000 and most preferably smaller than 30,000.

The polymeric dispersant has preferably a polydispersity PD smaller than 2, more preferably smaller than 1.75 and most preferably smaller than 1.5.

Commercial examples of polymeric dispersants are the following:
- DISPERBYK™ dispersants available from BYK CHEMIE GMBH;
- SOLSPERSE™ dispersants available from NOVEON;
- TEGO™ DISPERS™ dispersants from EVONIK;
- EDAPLAN™ dispersants from MÜNZING CHEMIE;
- ETHACRYL™ dispersants from LYONDELL;
- GANEX™ dispersants from ISP;
- DISPEX™ and EFKA™ dispersants from CIBA SPECIALTY CHEMICALS INC;
- DISPONER™ dispersants from DEUCHEM; and
- JONCRYL™ dispersants from JOHNSON POLYMER.

Particularly preferred polymeric dispersants include Solsperse™ dispersants from NOVEON, Efka™ dispersants from CIBA SPECIALTY CHEMICALS INC and Disperbyk™ dispersants from BYK CHEMIE GMBH. Particularly preferred dispersants are Solsperse™ 32000, 35000 and 39000 dispersants from NOVEON. The polymeric dispersant is preferably used in an amount of 2 to 600 wt%, more preferably 5 to 200 wt%, most preferably 50 to 90 wt% based on the weight of the pigment.

### Preparation of Inkjet Inks

Pigment dispersions may be prepared by precipitating or milling the pigment in the dispersion medium in the presence of the dispersant.

Mixing apparatuses may include a pressure kneader, an open kneader, a planetary mixer, a dissolver, and a Dalton Universal Mixer. Suitable milling and dispersion apparatuses are a ball mill, a pearl mill, a colloid mill, a high-speed disperser, double rollers, a bead mill, a paint conditioner, and triple rollers. The dispersions may also be prepared using ultrasonic energy.

Many different types of materials may be used as milling media, such as glasses, ceramics, metals, and plastics. In a preferred embodiment, the grinding media can comprise particles, preferably substantially spherical in shape, e.g. beads consisting essentially of a polymeric resin or yttrium stabilized zirconium beads.

In the process of mixing, milling and dispersion, each process is performed with cooling to prevent build up of heat, and as much as possible under light conditions in which actinic radiation has been substantially excluded.

The pigment dispersion may contain more than one pigment, the pigment dispersion or ink may be prepared using separate dispersions for each pigment, or alternatively several pigments may be mixed and co-milled in preparing the dispersion.

The dispersion process can be carried out in a continuous, batch or semi-batch mode.

The preferred amounts and ratios of the ingredients of the mill grind will vary widely depending upon the specific materials and the intended applications. The contents of the milling mixture comprise the mill grind and the milling media. The mill grind comprises pigment, polymeric dispersant and a liquid carrier. For inkjet inks, the pigment is usually present in the mill grind at 1 to 50 wt%, excluding the milling media. The weight ratio of pigment over polymeric dispersant is 20:1 to 1:2.

The milling time can vary widely and depends upon the pigment, the selected mechanical means and residence conditions, the initial and desired final particle size, etc. In the present invention pigment dispersions with an average particle size of less than 100 nm may be prepared.

After milling is completed, the milling media is separated from the milled particulate product (in either a dry or liquid dispersion form) using conventional separation techniques, such as by filtration, sieving through a mesh screen, and the like. Often the sieve is built into the mill, e.g. for a bead mill. The milled pigment concentrate is preferably separated from the milling media by filtration.

In general it is desirable to make inkjet inks in the form of a concentrated mill grind, which is subsequently diluted to the appropriate concentration for use in the inkjet printing system. This technique permits preparation of a greater quantity of pigmented ink from the equipment. By dilution, the inkjet ink is adjusted to the desired viscosity, surface tension, colour, hue, saturation density, and print area coverage for the particular application.

### EXAMPLES

### Materials

All materials used in the following examples were readily available from standard sources such as Aldrich Chemical Co. (Belgium) and Acros (Belgium) unless otherwise specified. The water used was deionized water.
**Special Black™ 550** is a carbon black pigment available from EVONIK (DEGUSSA).
**Sun Fast™ Blue 15:4** is a C.I. Pigment Blue 15:4 pigment from SUN CHEMICAL.
**Cromophtal™ Jet Magenta 2BC** is a 10/90 mixed crystal of C.I. Pigment Red 202 and C.I. Pigment Violet 19 available from CIBA.
**QAD** is the dispersion synergist according to Formula (A): 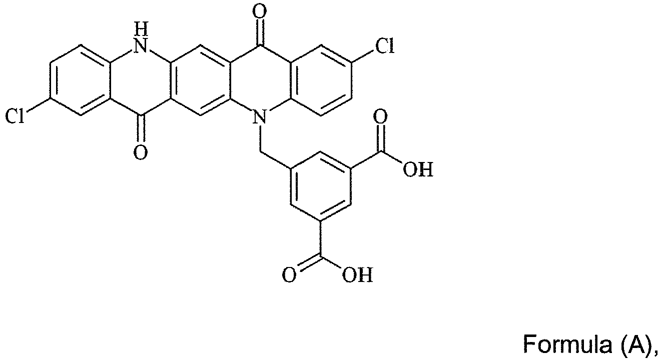 and was synthesized in the same manner as described in Example 1 of WO 2007/060254 (AGFA GRAPHICS) for the synergist QAD-3.
**DB162** is an abbreviation used for the polymeric dispersant Disperbyk™ 162 available from BYK CHEMIE GMBH whereof the solvent mixture of 2-methoxy-1-methylethylacetate, xylene and n-butylacetate was removed.
**IC819** is a bis(2,4,6-trimethylbenzoyl)-phenylphosphineoxide photoinitiator available as Irgacure™ 819 from BASF.
**STAB UV10** is 4-hydroxy-2,2,6,6-tetramethylpiperidinooxy sebacate available as Irgastab™ UV 10 from BASF.
**Omnipol™ TX** is the di-ester of carboxymethoxy-thioxanthone and polytetramethyleneglycol 250, Average MW of 790 and available from IGM Resins, Waalwijk, NL.
**Thioxantosol** is a 22.5 wt% solution of purified Omnipol™ TX in VEEA. Omnipol™ TX was purified and dissolved in VEEA to ensure low levels of thioxanthone and catalyst in the end product. The purification involved a liquid extraction using Omnipol™ TX that was first dissolved in ethylacetate and then brought into contact with a solution of potassium carbonate in water. The purification step was done by allowing extraction between the two phases at 55°C for about 1 hour and ended with a phase separation (30 minutes to separate). The water phase was removed after separation. This procedure was performed twice. Finally the ethylacetate is distilled from the solution and the remaining purified Omnipol™ TX is dissolved in VEEA at a concentration of 22.5 wt%.
**Genorad™ 16** is a polymerization inhibitor from RAHN AG.
**Cupferron**™ **AL** is aluminum N-nitrosophenylhydroxylamine from WAKO CHEMICALS LTD.
**SPEEDCURE™ 7040** is a polymeric 4-dimethylbenzoic acid derivative supplied by Lambson.
**VEEA** is 2-(vinylethoxy)ethyl acrylate available from NIPPON SHOKUBAI, Japan.
**DPGDA** is dipropyleneglycoldiacrylate from SARTOMER.
**Tego™ Rad 2100** is an acrylated polydimethylsiloxane-glycidolsiloxane surfactant available from EVONIK.
**BYK™ 333** is a polyether modified polydimethylsiloxane from BYK Chemie GmbH.
**BYK™ UV3500** is a polyether modified acrylated polydimethylsiloxane surfactant available from BYK Chemie GmbH.
**BYK™ UV3510** is a polyethermodified polydimethylsiloxane surfactant available from BYK Chemie GmbH
**Rokracure™ VP4889** is a modified polyurethane resin adhesion promoter available from Robert Kraemer GmbH.
**Rokracure™ VP 4864** is a modified polyurethane resin adhesion promoter available from Robert Kraemer GmbH.
**Ebecryl™ Leo 10553** is an amine modified polyetheracrylate advertised as adhesion promoter and available from CYTEC.
**SR455LM** is a high purity alkoxylated trifunctional acrylate from SARTOMER.
**SR415** is an ethoxylated trimethylolpropane triacrylate advertised as adhesion promoter and available as Sartomer™ SR415 from SARTOMER. **M286** is a polyethylene glycol diacrylate advertised as adhesion promoter and available as Miramer™ M286 from MIWON.
**Rokracure™ 6000** is a solution of 75% of a modified polyurethane resin adhesion promoter in HDDA available from Robert Kraemer GmbH.
**CN UVP210** is a low viscosity polyester acrylate adhesion promoter available from SARTOMER.
**Ebecryl**™ **113** is an aliphatic mono acrylate advertised as adhesion promoter and available from CYTEC.
**PP-1** is a corrugated polypropylene substrate available as Biprint™ 650 gr - 3.5 mm from Antalis.
**PP-2** is a 1 mm thick opaque polypropylene substrate from Vink NV.
**APET** is a polyethylene terephthalate substrate available as Veralite™ 100 from I.P.B NV (Belgium).

### Measurement Methods

### 1. Surface Tension

The static surface tension of the radiation curable inks was measured with a KRÜSS tensiometer K9 from KRÜSS GmbH, Germany at 25°C after 60 seconds.

### 2. Coin Test Adhesion

A coin of 50 Euro cent was pressed with light pressure under a 45° angle on the printed or coated inkjet ink and was moved while in contact with the printed or coated inkjet ink. In this qualitative test, "OK" means that no or almost no ink was removed by moving the coin, while "Not OK means that all or a considerable amount of the printed or coated inkjet ink was removed by moving the coin.

### 3. Tape Test Adhesion

A 5 cm long strip of a Tesatape™ 4104 PVC tape was pressed on to the printed inkjet ink. The tape was pressed four times with the thumb before removing it in one sharp pull. The adhesion was then evaluated in accordance with the evaluation values described in Table 1.

**Table 1**

| **Evaluation value** | **Observation** |
|---|---|
| **0** | Nothing removed, perfect adhesion. |
| **1** | Detachment of only very small parts of the inkjet ink coating , almost perfect adhesion. |
| **2** | Minor parts of the inkjet ink coating was removed by the tape, good adhesion |
| **3** | Large parts of the inkjet ink coating was removed by the tape, poor adhesion. |
| **4** | Most of the inkjet ink coating was removed by the tape, very poor adhesion. |
| **5** | The inkjet ink was completely removed from the substrate by the tape, no adhesion. |

### 4. Cross-cut Test Adhesion

The adhesion was evaluated by a cross-cut test according to ISO2409:1992(E). Paints. *International standard.* 1992-08-15. using a Braive No.1536 Cross Cut Tester from BRAIVE INSTRUMENTS with spacing of a 1 mm between cuts and using a weight of 600 g, in combination with a Tesatape™ 4104 PVC tape.

The evaluation was made in accordance with the evaluation values described in Table 2.

**Table 2**

| **Evaluation value** | **Observation** |
|---|---|
| **0** | The edges of the cuts are completely smooth: none of the squares of the lattice is detached (=perfect adhesion). |
| **1** | Detachment of small flakes of the coating at the intersections of the cuts. A cross-cut area not greater than 5% is affected. |
| **2** | The coating has flaked along the edges and/or at the intersections of the cuts. A cross-cut area greater than 5%, but not significantly greater than 15%, is affected. |
| **3** | The coating has flaked along the edges of the cuts partly or wholly in large ribbons, and/or it has flaked partly or wholly on different parts of the squares. A cross-cut area significantly greater than 15%, but not significantly greater than 35%, is affected. |
| **4** | The coating has flaked along the edges of the cuts in large ribbons, and/or some of the squares has detached partly or wholly.. A cross-cut area significantly greater than 35%, but not significantly greater than 65%, is affected. |
| **5** | Any degree of flaking that cannot even be classified by classification 4. |

### 5. Viscosity

The viscosity was measured at 25°C using a Haake™ Rotovisco at a shear rate of 1,000 s⁻¹.

### EXAMPLE 1

This example illustrates that silicone surfactants are very effective surfactants for reducing the surface tension and that non-(meth)acrylated silicone surfactants are not capable of improving the adhesion quality

### Preparation of Pigment Dispersion K

A 30 wt% solution of DB162 in VEEA was prepared. 1 wt% Genorad™ 16 was added. 1.103 kg Special Black™ 550 and 0.397 kg Sun Fast™ Blue 15:4 were added to a mixture of 1.95 kg VEEA, 2.5 kg of the DB162 solution and 50 g Genorad™ 16, while stirring with a DISPERLUX™ disperser (from DISPERLUX S.A.R.L., Luxembourg). Stirring was continued for 30 minutes. The vessel was connected to a DYNO™-MILL ECM Pilot mill from the company Willy A. Bachofen (Switzerland), preloaded with 1.5 kg 2-(2'-vinyloxyethoxy)ethylacrylate and filled for 42 % with 0.4 mm yttrium stabilized zirconia beads ("high wear resistant zirconia grinding media" from TOSOH Co.). The mixture was circulated over the mill for 3 hours 55 minutes at a flow rate of 1.5 l/min and a rotation speed in the mill of about 13 m/s. During the milling procedure, an additional 2.5 kg of the DB162 solution was added. During the complete milling procedure the content in the mill was cooled to keep the temperature below 40°C. After milling, the dispersion was discharged into a 15 L-vessel. The resulting concentrated pigment dispersion Dispersion K according to Table 3 exhibited an average particle size of 97 nm and a viscosity of 85 mPa.s.

**Table 3**

| **Component** | **wt%** |
|---|---|
| Special Black™ 550 | 11 |
| Sun Fast™ Blue 15:4 | 4 |
| DB162 | 15 |
| Genorad™ 16 | 1 |
| VEEA | 69 |

### Preparation of Pigment Dispersion M

A 30 wt% solution of DB162 in VEEA was prepared. 1 wt% Genorad™ 16 was added. 1.50 kg Cromophtal™ Jet Magenta 2BC was added to a mixture of 1.87 kg VEEA, 2.5 kg of the DB162 solution, 0.08 kg and 50 g Genorad™ 16, while stirring with a DISPERLUX™disperser (from DISPERLUX S.A.R.L., Luxembourg). Stirring was continued for 30 minutes. The vessel was connected to a DYNO™-MILL ECM Pilot mill from the company Willy A. Bachofen (Switzerland), preloaded with 1.5 kg 2-(2'-vinyloxyethoxy)ethylacrylate and filled for 42 % with 0.4 mm yttrium stabilized zirconia beads ("high wear resistant zirconia grinding media" from TOSOH Co.). The mixture was circulated over the mill for 5 hours 52 minutes at a flow rate of 1.5 l/min and a rotation speed in the mill of about 13 m/s. During the milling procedure, an additional 2.5 kg of the DB162 solution was added. During the complete milling procedure the content in the mill was cooled to keep the temperature below 40°C. After milling, the dispersion was discharged into a 15 L-vessel. The resulting concentrated pigment dispersion Dispersion M according to Table 4 exhibited an average particle size of 100 nm and a viscosity of 171 mPa.s.

**Table 4**

| **Component** | **wt%** |
|---|---|
| Cromophtal™ Jet Magenta 2BC | 15.0 |
| QAD | 0.8 |
| DB162 | 15.0 |
| Genorad™ 16 | 1.0 |
| VEEA | 68.2 |

### Preparation of Inkjet Inks

The inkjet inks Ink-1 to Ink-24 were all prepared in the same manner by mixing for 90 minutes the components according to Table 5. The composition of SurfMix for each inkjet ink is shown in Table 6. After addition of SurfMix, the surface tension of each inkjet ink Ink-1 to Ink-24 was measured.

**Table 5**

| **Component** | **wt%** |
|---|---|
| Dispersion K | 19.42 |
| Dispersion M | 4.89 |
| STAB UV10 | 0.20 |
| Thioxantosol | 22.12 |
| SPEEDCURE™ 7040 | 5.00 |
| IC819 | 3.00 |
| VEEA | 35.00 |
| SurfMix | 10.37 |

**Table 6**

| **Inkjet Ink** | **Composition of SurfMix** | | | | | **Surface Tension (mN/m)** |
|---|---|---|---|---|---|---|
| | **VEEA** | **Tego™ Rad 2100** | **BYK™ 333** | **BYK™ UV3500** | **BYK™ UV3510** | |
| **Ink-1** | 10.37 | --- | --- | --- | --- | 34.5 |
| **Ink-2** | 0.37 | 10.00 | --- | --- | --- | 23.9 |
| **Ink-3** | 0.34 | 10.00 | 0.03 | --- | --- | 22.8 |
| **Ink-4.** | 10.27 | --- | 0.10 | --- | --- | 23.1 |
| **Ink-5** | 10.07 | --- | 0.30 | --- | --- | 22.6 |
| **Ink-6** | 9.87 | --- | 0.50 | --- | --- | 22.5 |
| **Ink-7** | 9.37 | --- | 1.00 | --- | --- | 22.3 |
| **Ink-8** | 8.37 | --- | 2.00 | --- | --- | 22.5 |
| **Ink-9** | 5.37 | --- | 5.00 | --- | --- | 22.1 |
| **Ink-10** | 0.37 | --- | 10.00 | --- | --- | 22.4 |
| **Ink-11** | 10.27 | --- | --- | 0.10 | --- | 22.9 |
| **Ink-12** | 10.07 | --- | --- | 0.30 | --- | 22.3 |
| **Ink-13** | 9.87 | --- | --- | 0.50 | --- | 21.7 |
| **Ink-14** | 9.37 | --- | --- | 1.00 | --- | 21.2 |
| **Ink-15** | 8.37 | --- | --- | 2.00 | --- | 21.4 |
| **Ink-16** | 5.37 | --- | --- | 5.00 | --- | 21.5 |
| **Ink-17** | 0.37 | --- | --- | 10.00 | --- | 21.8 |
| **Ink-18** | 10.27 | --- | --- | --- | 0.10 | 22.5 |
| **Ink-19** | 10.07 | --- | --- | --- | 0.30 | 22.0 |
| **Ink-20** | 9.87 | --- | --- | --- | 0.50 | 22.1 |
| **Ink-21** | 9.37 | --- | --- | --- | 1.00 | 22.1 |
| **Ink 22** | 8.37 | --- | --- | --- | 2.00 | 21.9 |
| **Ink-23** | 5.37 | --- | --- | --- | 5.00 | 21.5 |
| **Ink-24** | 0.37 | --- | --- | --- | 10.00 | 21.7 |

All the radiation curable inkjet inks of Table 5 had a viscosity of less than 30 mPa.s at 25°C and at a shear rate of 1,000 s⁻¹.

The inkjet inks were tested for UV LED curability by coating the radiation curable inkjet inks of Table 5 on a PP-1 substrate, using a bar coater and a 10 µm wired bar. The coated sample was mounted on a belt, transporting the sample under a Phoseon 8W 395 nm LED at a speed of 30 m/min and at a distance of 4.5 mm from the LED.

It was observed that the inkjet inks Ink-2 to Ink-8 and Ink-11 to Ink-21 could be fully cured in 3 passes at 30 m/min. It is not clear why the Ink-1 lacking a silicone surfactant required 5 passes of the 8 W UV LED and the inks containing a large amount of non-polymerizable silicone surfactant required 6 to 8 passes of the 8 W UV LED.

From Table 6, it can be seen that a small amount of about 0.3 to 0.5 wt% of silicone surfactant is sufficient to drastically reduce the surface tension in UV curable inkjet inks. There is no motivation to add silicone surfactant above 0.50 wt% because the surface tension remains constant.

### Evaluation and Results

The radiation curable inkjet inks were all coated and cured in the same manner. A radiation curable inkjet ink was coated on a PP-1 substrate using a bar coater and a 10 µm wired bar. The coated sample was fully cured using a Fusion DRSE-120 conveyer, equipped with a Fusion VPS/I600 lamp (D-bulb), which transported the samples under the UV-lamp on a conveyer belt at a speed of 20 m/min. The adhesion quality was checked by a coin test.

In a second run the same radiation curable inkjet inks were tested for adhesion quality in the same manner except that the inkjet inks were coated and cured on a PP-1 substrate which had received a plasma treatment before coating.

The plasma treatment was conducted by passing the substrates manually through an atmospheric plasma. The device consisted of an FG 3001 generator and an RP1004 plasma rotation jet from the company Plasmatreat.

The coin test result of each inkjet ink was compared with the adhesion quality of the same inkjet ink coated on the substrate which had not received a plasma treatment to see if any further improvement in adhesion could be observed. The results are shown in Table 7.

**Table 7**

| **Inkjet ink** | **Silicone Surfactant** | | **Adhesion quality** | |
|---|---|---|---|---|
| | **Acrylated** | **Not Acrylated** | **Coin Test** | **Plasma Treatment Improvement** |
| Ink-1 | --- | --- | Not OK | No |
| Ink-2 | 10.00 | --- | OK | Yes |
| Ink-3 | 10.00 | 0.03 | OK | No |
| Ink-9 | --- | 5.00 | Not OK | No |
| Ink-10 | --- | 10.00 | Not OK | No |
| Ink-14 | 1.00 | --- | Not OK | No |
| Ink-15 | 2.00 | --- | Not OK | No |
| Ink-16 | 5.00 | --- | OK | No |
| Ink-17 | 10.00 | --- | OK | Yes |
| Ink-23 | --- | 5.00 | Not OK | No |
| Ink-24 | --- | 10.00 | Not OK | No |

From Table 7, it should be clear that good adhesion quality is only observed if sufficient acrylated silicone surfactant in the inkjet ink is present. Non-acrylated silicone surfactants could not ensure good adhesion even on a plasma treated polypropylene substrate.

The inkjet inks Ink-1, Ink-2, Ink-3, Ink-16 and Ink-17 were inkjet printed on a blow molded 250 mL polypropylene IV bag filled with an isotonic solution of 0.9% NaCl in distilled water at a pH of 5.5, which was treated with the plasma treatment as described above for the PP-1 substrate. The printed IV bags were steam sterilized for 15 minutes at 121 °C in an autoclave. The inkjet inks Ink-2, Ink-3, Ink-16 and Ink-17 containing at least 5 wt% of an acrylated silicone surfactant all passed the coin test for adhesion quality, while the inkjet Ink-1 failed.

### EXAMPLE 2

This example illustrates that compounds advertised as adhesion promoters for UV curable ink fail in improving the adhesion.

### Preparation of Inkjet Inks

The pigment dispersion Dispersion K and Dispersion M were prepared in the same manner as in Example 1. The comparative inkjet inks Comp-1 to Comp-9 and the inventive inkjet inks Inv-1 to Inv-11 were all prepared in the same manner by mixing for 90 minutes the components according to Table 8. The amount of Tego™ Rad 2100 and the amount and type of adhesion promoter in each inkjet ink is shown in Table 9. The inventive inkjet ink Inv-1 contained an extra 5 wt% of VEEA.

**Table 8**

| **Component** | **wt%** |
|---|---|
| Dispersion K | 19.42 |
| Dispersion M | 4.89 |
| STAB UV10 | 0.20 |
| Thioxantosol | 22.12 |
| SPEEDCURE™ 7040 | 5.00 |
| IC819 | 3.00 |
| VEEA | 35.34 |
| Byk™ 333 | 0.03 |
| Tego™ Rad 2100 | See Table 9 |
| Adhesion Promoter | See Table 9 |

**Table 9**

| **Inkjet Ink** | **Acrylated Silicone Surfactant** | **Adhesion Promoter** | |
|---|---|---|---|
| | **wt% Tego™ Rad 2100** | **wt%** | **Type** |
| **Inv-1** | 5 | --- | --- |
| **Inv-2** | 10 | --- | --- |
| **Comp-1** | --- | 10 | Rokracure™ VP4889 |
| **Inv-3** | 5 | 5 | Rokracure™ VP4889 |
| **Comp**-**2** | --- | 10 | Rokracure™ VP 4864 |
| **Inv-4** | 5 | 5 | Rokracure™ VP 4864 |
| **Comp**-**3** | --- | 10 | Ebecryl™ Leo 10553 |
| **Inv-5** | 5 | 5 | Ebecryl™ Leo 10553 |
| **Comp**-**4** | --- | 10 | SR455LM |
| **Inv-6** | 5 | 5 | SR455LM |
| **Comp**-**5** | --- | 10 | SR415 |
| **Inv-7** | 5 | 5 | SR415 |
| **Comp**-**6** | --- | 10 | M286 |
| **Inv-8** | 5 | 5 | M286 |
| **Comp**-**7** | --- | 10 | Rokracure™ 6000 |
| **Inv-9** | 5 | 5 | Rokracure™ 6000 |
| **Comp**-**8** | --- | 10 | CN UVP210 |
| **Inv-10** | 5 | 5 | CN UVP210 |
| **Comp-9** | --- | 10 | Ebecryl™ 113 |
| **Inv-11** | 5 | 5 | Ebecryl™ 113 |

All the comparative inkjet inks Comp-1 to Comp-9 and the inventive inkjet inks Inv-1 to Inv-11 of Table 9 had a surface tension between 22 and 25 mN.m and a viscosity of less than 30 mPa.s at 25°C and at a shear rate of 1,000 s⁻¹.

The comparative inkjet inks Comp-1 to Comp-9 and the inventive inkjet inks Inv-1 to Inv-11 were tested in the same manner as in EXAMPLE 1 except that a Phoseon 12W 395 nm LED was used at a distance of 4.5 mm from the LED. The comparative inkjet inks Comp-1 to Comp-9 and the inventive inkjet inks Inv-1 to Inv-11 were found to be fully cured in 2 passes at 30 m/min.

The comparative inkjet inks Comp-1 to Comp-9 and the inventive inkjet inks Inv-1 to Inv-11 were inkjet printed on a plasma treated blow molded 250 mL polypropylene IV bag filled with a isotonic solution of 0.9% NaCl in distilled water and tested for adhesion with the tape test after the IV bags were steam sterilized for 15 minutes at 121 °C in an autoclave. The results for the tape test adhesion are shown in Table 10.

**Table 10**

| **Inkjet ink** | **Tape Test Adhesion** |
|---|---|
| Inv-1 | 0 |
| Inv-2 | 0 |
| Comp-1 | 5 |
| Inv-3 | 0 |
| Comp-2 | 5 |
| Inv-4 | 0 |
| Comp-3 | 4 |
| Inv-5 | 0 |
| Comp-4 | 3 |
| Inv-6 | 0 |
| Comp-5 | 1 |
| Inv-7 | 0 |
| Comp-6 | 2 |
| Inv-8 | 0 |
| Comp-7 | 3 |
| Inv-9 | 0 |
| Comp-8 | 3 |
| Inv-10 | 0 |
| Comp-9 | 2 |
| Inv-1 | 0 |

From Table 10, it should be clear that none of the adhesion promoters was capable of improving the adhesion quality. However, if half of the adhesion promoter was replaced by an acrylated silicone surfactant perfected adhesion quality was observed.

The inkjet inks containing 10 wt% of the acrylated silicone surfactant or 10 wt% of the adhesion promoter were tested for adhesion quality on three, either untreated or plasma treated, polypropylene substrates in the same way as described above. The results of the tape adhesion test are shown in Table 11.

**Table 11**

| **Inkjet Ink** | **untreated PP-1** | **plasma treated PP-1** | **plasma treated PP-2** |
|---|---|---|---|
| **Inv-2** | 0 | 0 | 0 |
| **Comp-1** | 5 | 5 | 4 |
| **Comp-2** | 5 | 4 | 4 |
| **Comp-3** | 4 | 3 | 1 |
| **Comp-4** | 4 | 3 | 2 |
| **Comp-5** | 4 | 2 | 1 |
| **Comp-6** | 3 | 3 | 1 |
| **Comp-7** | 4 | 5 | 4 |
| **Comp-8** | 4 | 1 | 2 |
| **Comp-9** | 4 | 2 | 1 |

Table 10 shows that only the inkjet ink Inv-1 exhibited superior adhesion quality on all three tested polypropylene substrates.

The inkjet ink Inv-2 was also tested on a polyethylene terephthalate substrate APET in the same manner as above for the polypropylene substrates but without a plasma treatment. The tape adhesion test resulted in an evaluation value "0", i.e. perfect adhesion.

### EXAMPLE 3

In printing on, for example, the infusion bags used in Example 1 and 2 it is imperative that no or acceptable levels of migrateables from the inkjet ink are collected by the isotonic solution. This example illustrates that radiation curable inkjet inks in accordance with the invention can be prepared that remain within limits of applicable legislations such as the Swiss ordinance SR 817.023.21 on Objects and Materials.

### Preparation of Inkjet Ink

A blow molded 250 mL polypropylene IV bag was filled with an isotonic sodium chloride solution (0.9%, pH 5.5). The filled bag was first plasma treated using an atmospheric plasma (Plasmatreat), secondly printed with the ink composition INK-3 using a Konica Minolta 512 M piezo print head in 3 dpd at 24 m/min and the ink was cured using two 8W Phoseon 395 nm LED lamps at a speed of 30 m/min. The printed bag was then sterilised in an autoclave for 20 minutes. The amount of ink on the bag covered 16% of the surface.

Analysis of the migrating compounds was performed using HPLC-UV and/or LC-MS-(MS). DB162, BYK™ 333 and the pigments were not analysed as they are not prone to migration due to their size. Table 12 gives the analysis and detection method used for each compound.

**Table 12**

| **Compound** | **Analysis method** | **Detection wavelength or m/z** |
|---|---|---|
| VEEA | HPLC-UV | 204 nm |
| Genorad™ 16 | HPLC-UV | 220-280-290 nm |
| STAB UV10 | HPLC-UV | 240 nm |
| SPEEDCURE™ 7040 | LCMS | m/z 600-900 |
| Quinasyn | HPLC-UV | 312 nm |
| Omnipol™ TX | HPLC-UV | 254 nm |
| | LCMS | m/z 600-800 |
| IC819 | HPLC-UV | 234 nm |
| Tego™ Rad 2100 | LCMSMS | m/z 600-900 |
| DB162 | none | polymeric |
| BYK™ 333 | none | polymeric |
| Special Black™ 550 | none | pigment |
| Chromphtal™ Jet Magenta | none | pigment |
| Sun Fast™ Blue 15:4 | none | pigment |

### Evaluation and Results

### HPLC-UV method

A 100µl sample was injected in HPLC for quantification of the different ink compounds, without any further dilution and/or concentration step (except for Cupferron™ Al, a compound in Genorad™ 16: enrichment by factor 10 performed on 6 mL C18 column).

The chromatographic method used an Altima™ C18 5µm column (150 x 3.2 mm) supplied by Alltech. A flow rate of 0.5 ml/min was used at a temperature of 40 °C.

The HPLC method used for all samples had an applied gradient with an end run = 38 min as given in Table 13 wherein eluent A was water and eluent B was acetonitrile. Detection was performed using UV-diode array detection (DAD).

**Table 13**

| **Time (min)** | **% eluent A** | **% eluent B** |
|---|---|---|
| 0 | 55 | 45 |
| 6 | 55 | 45 |
| 11 | 0 | 100 (linear gradient) |
| 30 | 0 | 100 |
| 31 | 55 | 45 |
| 38 | 55 | 45 |

The migrated amounts of the different ink compounds were assessed by spiking an identical isotonic sodium chloride solution from an unprinted and heat treated bag with 10 ppb of each ink compound. 10 ppb is considered the safe threshold for specific migration for any non-CMR compound, regardless of the availability of toxicology data. The migrated amount of each compound is expressed as microgram per kilogram of isotonic solution (ppb). The amount, migrated from the total surface area
to the 250 mL solution, expressed in µg, was recalculated to 1 kg. LC-MS method

A 25 µl sample was injected without any dilution onto an HPLC column. Ink ingredients were detected using ESI-MS detection.

The chromatographic method used an Altima™ C18 5µm column (150 x 3.0 mm) supplied by Alltech. A flow rate of 0.35 ml/min was used at a temperature of 40 °C.

The HPLC method used for all samples had an applied gradient with an end run = 38 min as given above in Table 13 wherein eluent A was water and eluent B was acetonitrile.

The specific migration results expressed as ppb found in the isotonic solution are shown in Table 14. The value "< 10" means that he compounds could not be detected and if it would be nevertheless present it will be below 10 ppb.

**Table 14**

| **Compound** | **ppb (microgram/liter water)** |
|---|---|
| VEEA | 1 |
| Genorad™ 16 | < 10 |
| Irgastab™ UV 10 | < 10 |
| Speedcure™ 7040 | < 10 |
| QAD | < 10 |
| Omnipol™ TX | 0-5 |
| Irgacure™ 819 | < 10 |
| Tego™ Rad 2100 | < 10 |
| DB162 | polymeric |
| BYK™ 333 | polymeric |
| Special Black™ 550 | pigment |
| Chromphtal™ Jet Magenta | pigment |
| Sun Fast™ Blue 15:4 | pigment |

From Table 14, It is clear that all compounds remained below the 10 ppb threshold. It should be noted that several compounds have higher allowable specific migration limits than the 10 ppb threshold as for example described the Swiss ordinance on materials and articles SR 817.023.21.

## Claims

1. A production method of foodstuffs and pharmaceuticals comprising, in order, the steps of:
a) jetting a radiation curable inkjet ink having a viscosity smaller than 30 mPa.s at 25°C and at a shear rate of 1,000 s⁻¹ on a polymeric surface of a packaging material;
b) curing the radiation curable inkjet ink on the polymeric surface of the packaging material (21); and
c) heat sterilization of the packaging material (21);
wherein the polymeric surface is the outside surface of a packaging material for including a substance for human or animal consumption or administration; and wherein the radiation curable inkjet ink includes a vinyl ether acrylate and a photoinitiator selected from the group consisting of non-polymeric multifunctional photoinitiators, oligomeric or polymeric photoinitiators and polymerizable photoinitiators.

2. The production method according to claim 1, wherein the photoinitiator is selected from the group consisting of polymeric photoinitiators and polymerizable photoinitiators.

3. The production method according to claim 1 or 2, wherein the vinyl ether acrylate is 2- (2-vinyloxyethoxy)ethyl acrylate.

4. The production method according to any one of claims 1 to 3, wherein the heat sterilization is dry heat sterilization.

5. The production method according to any one of claims 1 to 4, wherein the heat sterilization is moist sterilization and wherein the radiation curable inkjet ink includes at least 5 wt% of a (meth)acrylated silicone surfactant based on the total weight of the radiation curable inkjet ink.

6. The production method according to any one of claims 1 to 5, wherein the polymeric surface is the outside surface of a packaging including a substance for human or animal consumption or administration.

7. The production method according to any one of claims 1 to 6, wherein the radiation curable inkjet ink includes bis(2,4,6-trimethylbenzoyl)-phenylphosphineoxide.

8. The production method according to any one of claims 1 to 7, wherein the radiation curable inkjet ink includes a polymerizable or polymeric tertiary amine co-initiator.

9. The production method according to any one of claims 1 to 8, wherein the radiation curable inkjet ink on the polymeric surface is cured by UV radiation emitted by one or more light emitting diodes or lasers.

10. The production method according to any one of claims 1 to 8, wherein the polymer of the polymeric surface is selected from the group consisting of polyethylene terephthalate, polyethylene, polypropylene and copolymers thereof.

11. The production method according to any one of claims 1 to 9, wherein the radiation curable inkjet ink includes a black pigment and at least one pigment selected from the group consisting of a blue pigment, a cyan pigment, magenta pigment and a red pigment.

## Patentansprüche

1. Fertigungsverfahren für Nahrungsmittel und pharmazeutische Produkte, das der Reihe nach die folgenden Schritte umfasst:
a) Aufspritzen einer strahlungshärtbaren Tintenstrahltinte mit einer Viskosität von weniger als 30 mPa.s bei 25°C und einer Schergeschwindigkeit von 1.000 s⁻¹ auf eine polymere Oberfläche eines Verpackungsmaterials,
b) Härten der strahlungshärtbaren Tintenstrahltinte auf der polymeren Oberfläche des Verpackungsmaterials (21), und
c) Hitzesterilisation des Verpackungsmaterials (21),
wobei die polymere Oberfläche die äußere Oberfläche eines Verpackungsmaterials ist, das eine Substanz für menschlichen oder tierischen Verzehr oder Verabreichung enthalten kann, und wobei die strahlungshärtbare Tintenstrahltinte ein Vinyletheracrylat und einen Fotoinitiator aus der Gruppe bestehend aus nichtpolymeren multifunktionellen Fotoinitiatoren, oligomeren oder polymeren Fotoinitiatoren und polymerisierbaren Fotoinitiatoren enthält.

2. Fertigungsverfahren nach Anspruch 1, wobei der Fotoinitiator aus der Gruppe bestehend aus polymeren Fotoinitiatoren und polymerisierbaren Fotoinitiatoren gewählt wird.

3. Fertigungsverfahren nach Anspruch 1 oder 2, wobei das Vinyletheracrylat 2-(2-Vinyloxyethoxy)-ethylacrylat ist.

4. Fertigungsverfahren nach einem der Ansprüche 1 bis 3, wobei die Hitzesterilisation eine Trockenhitzesterilisation ist.

5. Fertigungsverfahren nach einem der Ansprüche 1 bis 4, wobei die Hitzesterilisation eine Sterilisation mit feuchter Hitze ist und die strahlungshärtbare Tintenstrahltinte mindestens 5 Gew.-% eines (meth)acrylierten Silikontensids, bezogen auf das Gesamtgewicht der strahlungshärtbaren Tintenstrahltinte, enthält.

6. Fertigungsverfahren nach einem der Ansprüche 1 bis 5, wobei die polymere Oberfläche die äußere Oberfläche einer Verpackung ist, die eine Substanz für menschlichen oder tierischen Verzehr oder Verabreichung enthält.

7. Fertigungsverfahren nach einem der Ansprüche 1 bis 6, wobei die strahlungshärtbare Tintenstrahltinte Bis(2,4,6-trimethylbenzoyl)-phenylphosphinoxid enthält.

8. Fertigungsverfahren nach einem der Ansprüche 1 bis 7, wobei die strahlungshärtbare Tintenstrahltinte einen polymerisierbaren oder polymeren tertiären Amin-Coinitiator enthält.

9. Fertigungsverfahren nach einem der Ansprüche 1 bis 8, wobei die strahlungshärtbare Tintenstrahltinte auf der polymeren Oberfläche durch UV-Strahlung, die von einer oder mehreren Licht emittierenden Dioden oder Lasern ausgestrahlt wird, gehärtet wird.

10. Fertigungsverfahren nach einem der Ansprüche 1 bis 8, wobei das Polymer der polymeren Oberfläche aus der Gruppe, die aus Polyethylenterephthalat, Polyethylen, Polypropylen und Copolymeren davon besteht, gewählt wird.

11. Fertigungsverfahren nach einem der Ansprüche 1 bis 9, wobei die strahlungshärtbare Tintenstrahltinte ein Schwarzpigment und mindestens ein Pigment ausgewählt aus der Gruppe, die aus einem Blaupigment, einem Cyanpigment, einem Magentapigment und einem Rotpigment besteht, umfasst.

## Revendications

1. Procédé de production pour des produits alimentaires et pharmaceutiques, comprenant, dans l'ordre indiqué, les étapes consistant à:
a) projeter une encre pour impression à jet d'encre durcissable par rayonnement ayant une viscosité inférieure à 30 mPa.s à 25°C et à une vitesse de cisaillement de 1.000 s⁻¹ sur une surface polymère d'un matériau d'emballage,
b) durcir l'encre pour impression à jet d'encre durcissable par rayonnement sur la surface polymère du matériau d'emballage (21), et
c) effectuer une stérilisation à la chaleur du matériau d'emballage (21),
**caractérisé en ce que** la surface polymère est la surface extérieure d'un matériau d'emballage pouvant contenir une substance destinée à la consommation ou administration humaine ou animale et que l'encre pour impression à jet d'encre durcissable par rayonnement contient un acrylate d'éther vinylique et un photo-initiateur choisi parmi le groupe composé de photo-initiateurs multifonctionnels non polymères, de photo-initiateurs oligomères, de photo-initiateurs polymères et de photo-initiateurs polymérisables.

2. Procédé de production selon la revendication 1, **caractérisé en ce que** le photo-initiateur est choisi parmi le groupe composé de photo-initiateurs polymères et de photo-initiateurs polymérisables.

3. Procédé de production selon la revendication 1 ou 2, **caractérisé en ce que** l'acrylate d'éther vinylique est l'acrylate de 2-(2-vinyloxyéthoxy)-éthyle.

4. Procédé de production selon l'une quelconque des revendications 1 à 3, **caractérisé en ce que** la stérilisation à la chaleur est une stérilisation à la chaleur sèche.

5. Procédé de production selon l'une quelconque des revendications 1 à 4, **caractérisé en ce que** la stérilisation à la chaleur est une stérilisation à la chaleur humide et que l'encre pour impression à jet d'encre durcissable par rayonnement contient au moins 5% en poids d'un agent tensioactif à base d'une silicone (méth)acrylée par rapport au poids total de l'encre pour impression à jet d'encre durcissable par rayonnement.

6. Procédé de production selon l'une quelconque des revendications 1 à 5, **caractérisé en ce que** la surface polymère est la surface extérieure d'un emballage contenant une substance destinée à la consommation ou administration humaine ou animale.

7. Procédé de production selon l'une quelconque des revendications 1 à 6, **caractérisé en ce que** l'encre pour impression à jet d'encre durcissable par rayonnement contient de l'oxyde de bis(2,4,6-triméthylbenzoyl)-phénylphosphine.

8. Procédé de production selon l'une quelconque des revendications 1 à 7, **caractérisé en ce que** l'encre pour impression à jet d'encre durcissable par rayonnement contient un co-initiateur polymérisable ou polymère à base d'une amine tertiaire.

9. Procédé de production selon l'une quelconque des revendications 1 à 8, **caractérisé en ce que** l'encre pour impression à jet d'encre durcissable par rayonnement sur la surface polymère est durcie par rayonnement UV émis par une ou plusieurs diodes électroluminescentes ou des lasers.

10. Procédé de production selon l'une quelconque des revendications 1 à 8, **caractérisé en ce que** le polymère de la surface polymère est choisi parmi le groupe composé de polyéthylène-téréphtalate, de polyéthylène, de polypropylène et de copolymères de ceux-ci.

11. Procédé de production selon l'une quelconque des revendications 1 à 9, **caractérisé en ce que** l'encre pour impression à jet d'encre durcissable par rayonnement contient un pigment noir et au moins un pigment choisi parmi le groupe composé d'un pigment bleu, d'un pigment cyan, d'un pigment magenta et d'un pigment rouge.
